# EUROPEAN PATENT SPECIFICATION

(11) **EP 3 604 836 B1**
(45) Date of publication and mention of the grant of the patent: **17.05.2023**
(21) Application number: 18775081.5
(22) Date of filing: 22.03.2018
(51) Int. Cl.: F16B 39/20, F16B 39/32, B25D 9/08, B28D 1/28, F16B 2/24

(54) **ANTI-ROTATION RING-SHAPED MEMBER, AND COMPRESSED AIR-DRIVEN CHISEL**
RINGFÖRMIGES DREHSCHUTZELEMENT UND DRUCKLUFTBETRIEBENER MEISSEL
ÉLÉMENT ANNULAIRE ANTI-ROTATION, ET CISEAU ENTRAÎNÉ PAR AIR COMPRIMÉ

(30) Priority: 29.03.2017 JP 2017064858; 06.06.2017 JP 2017112052
(43) Date of publication of application: 05.02.2020
(73) Proprietor: Nitto Kohki Co., Ltd., Tokyo 146-8555 (JP)
(72) Inventor: INAGAKI, Fumio, Tokyo 146-8555 (JP); SHIMADA, Keisuke, Tokyo 146-8555 (JP); MURAKAMI, Keiichi, Tokyo 146-8555 (JP)
(74) Representative: Klang, Alexander H.
(86) International application number: PCT/JP2018/011279
(87) International publication number: WO 2018/180833

(56) References cited:
- FR-A- 928 433
- GB-A- 2 114 495
- GB-A- 2 138 347
- JP-A- 2011 241 865
- JP-A- 2016 038 026
- JP-U- H0 425 016
- JP-U- S53 111 162
- JP-Y1- S5 010 580
- JP-Y1- S5 010 580
- KR-A- 20040 078 783
- US-A- 3 867 972
- US-A1- 2004 226 729

## Description

### Technical Field:

The present invention relates to a rotation preventing ring-shaped member according to the preamble of claim 1 preventing two threadedly joined elements from being rotated relative to each other in a direction for releasing the threaded engagement between the two elements, and also relates to a compressed air-driven chisel according to the preamble of claim 10. Such a rotation preventing ring-shaped member is known from JP S50 10580 Y1 and such a compressed air-driven chisel is known from GB 2 114 495 A.

### Background Art:

There is known a compressed air-driven chisel including a cylindrical chisel body having a needle holder driven forward and backward by compressed air introduced into the chisel body, and a forward end cylindrical member threadedly joined to the forward end of the chisel body to prevent the needle holder from forwardly coming out of the chisel body and to allow needles (needle chisels) retained by the needle holder to pass therethrough so as to extend forward. With this type of compressed air-driven chisel, the forward end cylindrical member may come loose and disengage from the chisel body due to violent vibration during working.

To prevent the above-described disengagement of the forward end cylindrical member from the chisel body due to loosening, a conventional compressed air-driven chisel of the type described above has a rotation preventing ring-shaped member provided around the joint of the two members. The rotation preventing ring-shaped member is fitted into an annular recess provided on an outer surface of the chisel body adjacent to the forward end edge thereof (or, alternatively, so as to extend over from the outer surface to an outer surface of the forward end cylindrical member adjacent to the forward end edge). The rotation preventing ring-shaped member has first and second locking portions projecting from one end of the rotation preventing ring-shaped member in opposite sideward directions. The first locking portion is fitted into a recess provided on the outer surface of the chisel body, and the second locking portion is fitted into a recess provided on the outer surface of the forward end cylindrical member, thereby preventing relative rotation between the chisel body and the forward end cylindrical member. When the rotation preventing ring-shaped member is to be removed from the annular recess, a release portion provided at the other end of the rotation preventing ring-shaped member so as to be bent radially outward is pushed in a circumferential direction along the rotation preventing ring-shaped member toward the one end of the rotation preventing ring-shaped member, where the first and second locking portions are provided, thereby causing an intermediate portion of the rotation preventing ring-shaped member to be partially raised from the annular recess, and a rodshaped member or the like is inserted between the raised portion of the rotation preventing ring-shaped member and the annular recess to remove the rotation preventing ring-shaped member from the annular recess.

### Citation List:

### Patent Literature:

JP S50 10580 Y1 is related to a rotation preventing ring-shaped member according to the preamble of claim 1. Further, US 3 867 972 A relates to nuts and locknuts helicoidally coupled in a single unit for tightening at a controlled torsion.

### Summary of Invention:

### Technical Problem:

The above-described rotation preventing ring-shaped member is formed from a member having an elastic modulus sufficient for the rotation preventing ring-shaped member to be reliably held in the annular recess. Therefore, it is not necessarily easy to remove the rotation preventing ring-shaped member from the annular recess as stated above. The present invention has been made in view of these circumstances, and an object of the present invention is to provide a rotation preventing ring-shaped member usable to allow the forward end cylindrical member to be rotated in the direction for releasing the threaded engagement without disengaging the forward end cylindrical member from the chisel body, and also to provide a compressed air-driven chisel using the rotation preventing ring-shaped member. The rotation preventing ring-shaped member is not only usable for the compressed air-driven chisel but also capable of preventing two threadedly joined elements from rotating relative to each other in a direction for releasing the threaded engagement between the two elements.

### Solution to Problem:

In accordance with the present invention, a rotation preventing ring-shaped member as set forth in claim 1 and a compressed air-driven chisel as set forth in claim 10 are provided. Further embodiments are inter alia disclosed in the dependent claims. The rotation preventing ring-shaped member according may be circumferentially attached around a joint where a second element is joined to a first element by threaded engagement to prevent the second element from rotating relative to the first element in a threaded engagement releasing direction. The rotation preventing ring-shaped member has a ring-shaped body circumferentially disposed on at least the outer peripheral surface of an end edge portion of the first element at the joint. The ring-shaped body has a first locking portion to be locked to the first element. The rotation preventing ring-shaped member further has a second locking portion extending sideward from the ring-shaped body at a position circumferentially away from the first locking portion of the ring-shaped body to engage the second element, thereby preventing rotation of the second element relative to the first element in the threaded engagement releasing direction. Further, the rotation preventing ring-shaped member has a release portion provided on the ring-shaped body at a position more circumferentially away from the first locking portion than the second locking portion. The ring-shaped body is configured such that when the release portion is displaced in a circumferential direction extending toward the first locking portion along the ring-shaped body, the ring-shaped body is curved between the release portion and the first locking portion so as to be raised from the outer peripheral surface of the first element, thereby causing the second locking portion to disengage from the second element, and thus allowing the second element to be rotated in the threaded engagement releasing direction.

The rotation preventing ring-shaped member allows the second element to be rotated in the threaded engagement releasing direction simply by pushing the release portion circumferentially so that the second locking portion preventing rotation of the second element in the threaded engagement releasing direction is disengaged from the second element, without detaching the rotation preventing ring-shaped member from the first element.

The ring-shaped body may be formed by curving an elastic strip member (elongated plate-shaped member). It should, however, be noted that the ring-shaped body need not necessarily be formed from a strip member, and that any elastic ring-shaped material may be used as the ring-shaped body. It should also be noted that the term "ring shape" means a shape curved so that the ring-shaped body is retained around the first element.

The first locking portion may be configured to extend sideward from the ring-shaped body so as to engage the first element, thereby preventing the ring-shaped body from moving circumferentially. The first locking portion is for preventing the ring-shaped body from rotating circumferentially; therefore, a securing pin or a securing material, e.g. an adhesive, may be used to constitute the first locking portion. This alternative configuration may be used in place of or in combination with the above-described configuration in which the first locking portion extends sideward.

The arrangement may be as follows. The ring-shaped body is attached around the first element at a position inward of an end edge of the first element at the joint. The first locking portion extends sideward from both sides of the ring-shaped body to engage the first element, thereby preventing the ring-shaped body from moving circumferentially, and the second locking portion extends sideward from the ring-shaped body beyond the end edge of the first element to engage the second element. Thus, the first locking portion extending sideward from both sides of the ring-shaped body is engaged with the first element, thereby allowing the ring-shaped body to be curved stably when the release portion is pushed. In this regard, however, the first locking portion may be configured to extend sideward from only one side of the ring-shaped body.

The release portion may be configured to extend radially outward from the ring-shaped body to receive a force causing the release portion to be displaced in a circumferential direction extending toward the first locking portion along the ring-shaped body. The release portion is for applying a force for curving the ring-shaped body. Therefore, the release portion may be formed by securing to the ring-shaped body a member discrete from the ring-shaped body.

As a typical example, the first locking portion and the release portion may be provided at the opposite ends, respectively, of the ring-shaped body.

The ring-shaped body may be configured such that when the ring-shaped body is attached to the joint, the opposite end portions of the ring-shaped body are overlapped each other, and that when the release portion is displaced in a circumferential direction extending toward the first locking portion along the ring-shaped body to thereby cause the ring-shaped body to be curved radially outward, the opposite end portions of the ring-shaped body are engaged with each other to hold the ring-shaped body in the curved state.

For example, the arrangement may be as follows. A locking projection projecting radially outward is provided at one end of the ring-shaped body adjacently to the first locking portion, and an opening is provided at the other end of the ring-shaped body, so that when the release portion is displaced circumferentially, the locking projection fits into the opening, thereby allowing the ring-shaped body to be held in a curved state.

The present invention provides a compressed air-driven chisel according to claim 10. That is, the compressed air-driven chisel has the following: a cylindrical chisel body; a needle holder disposed in the chisel body and driven forward and backward in an axial direction by compressed air introduced into the chisel body, the needle holder retaining a plurality of needles such that the needles extend forward from a forward end opening of the chisel body; a forward end cylindrical member of cylindrical shape joined to the chisel body by being threadedly engaged with the forward end opening of the chisel body to retain the needle holder in the chisel body and to allow the needles to extend forward; and the rotation preventing ring-shaped member according to any one of claims 1 to 9.

The rotation preventing ring-shaped member is circumferentially disposed around the outer peripheral surface of a forward end edge portion of the chisel body and locked to the chisel body by the first locking portion. The second locking portion is engaged with the outer surface of the forward end cylindrical member to prevent the forward end cylindrical member from rotating relative to the chisel body in a threaded engagement releasing direction.

It should be noted that the above-described cylindrical chisel body may comprise a cylinder accommodating the needle holder and a cylindrical housing accommodating the cylinder, as stated in an embodiment of the invention of this application which will be explained below, or may comprise the above-described cylinder and housing, which are integrated with each other.

The arrangement may be as follows. The forward end cylindrical member in the compressed air-driven chisel has a recess (corresponding to second locking recesses 46 in the embodiment explained below) provided in a portion of the outer peripheral surface thereof adjacent to the forward end edge portion of the chisel body, and the second locking portion is engaged in the recess to prevent the forward end cylindrical member from rotating in the threaded engagement releasing direction.

The arrangement may be as follows. The recess has a rotation preventing surface engaged by the second locking portion engaged in the recess when the forward end cylindrical member is urged to rotate in the threaded engagement releasing direction without displacing the release portion in a circumferential direction extending toward the first locking portion along the ring-shaped body, thereby preventing the forward end cylindrical member from rotating in the threaded engagement releasing direction. The recess further has an inclined surface allowing the second locking portion engaged in the recess to be displaced radially outward from the recess when the forward end cylindrical member is urged to rotate in a threadedly engaging direction.

With the above-described arrangement, it is possible to prevent rotation of the forward end cylindrical member in the threaded engagement releasing direction and to allow rotation of the forward end cylindrical member in the threadedly engaging direction, with the rotation preventing ring-shaped member left attached to the chisel body.

Another form of the recess may be as follows. The recess has a bottom surface and a side surface extending from an end of the bottom surface at a threadedly engaging direction side thereof to the outer peripheral surface of the forward end cylindrical member so as to be inclined in the threadedly engaging direction, thereby constituting the rotation preventing surface. The recess further has a side surface extending from an end of the bottom surface at a threaded engagement releasing direction side thereof to the outer periphery of the forward end cylindrical member so as to be inclined in the threaded engagement releasing direction, thereby constituting the inclined surface. The side surface of the recess at a threadedly engaging direction side thereof is endowed with the above-described function of preventing rotation in the threaded engagement releasing direction, and in addition, the side surface is inclined as stated above to prevent interference with the radially outward displacement of the second locking portion. That is, when the release portion is displaced in a circumferential direction extending toward the first locking portion circumferentially across the second locking portion, the rotation preventing ring-shaped member is curved between the release portion and the first locking portion so as to be raised from the outer peripheral surface of the first element, and thus the second locking portion is displaced radially outward from the recess. At this time, the second locking portion can be displaced radially outward even if engaging the rotation preventing surface.

Embodiments of a rotation preventing ring-shaped member and a compressed air-driven chisel using the same according to the present invention will be explained below on the basis of the accompanying drawings.

### Brief Description of Drawings:

Fig. 1 is a perspective view of a compressed air-driven chisel according to an embodiment of the present invention.
Fig. 2 is a longitudinal sectional view of the compressed air-driven chisel in Fig. 1, showing the compressed air-driven chisel when not driven.
Fig. 3 is a perspective view of a rotation preventing ring-shaped member used in the compressed air-driven chisel shown in Fig. 1.
Fig. 4 is a side view of the rotation preventing ring-shaped member shown in Fig. 3.
Fig. 5 is a front view of the rotation preventing ring-shaped member shown in Fig. 3.
Fig. 6 is a front end view of the compressed air-driven chisel shown in Fig. 1.
Fig. 7 is a front end view similar to Fig. 6, showing the way in which a release portion of the rotation preventing ring-shaped member is displaced to expand a ring-shaped body radially outward, thereby allowing a forward end cylindrical member to rotate in a threaded engagement releasing direction.
Fig. 8 is a perspective view of the forward end cylindrical member of the compressed air-driven chisel shown in Fig. 1.
Fig. 9 is a perspective view showing a modification of the forward end cylindrical member.
Fig. 10 is a perspective view showing another modification of the forward end cylindrical member.
Fig. 11 is a perspective view showing a modification of the rotation preventing ring-shaped member.
Fig. 12 is a front view of the rotation preventing ring-shaped member in Fig. 11, showing the way in which the rotation preventing ring-shaped member is attached to the compressed air-driven chisel.
Fig. 13 is a perspective view of the rotation preventing ring-shaped member in Fig. 11 as seen from another direction.
Fig. 14 is a front end view showing a rotation preventing ring-shaped member according to another embodiment.

### Description of Embodiments:

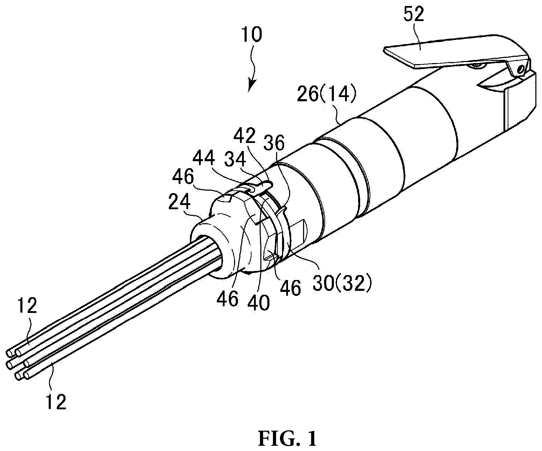

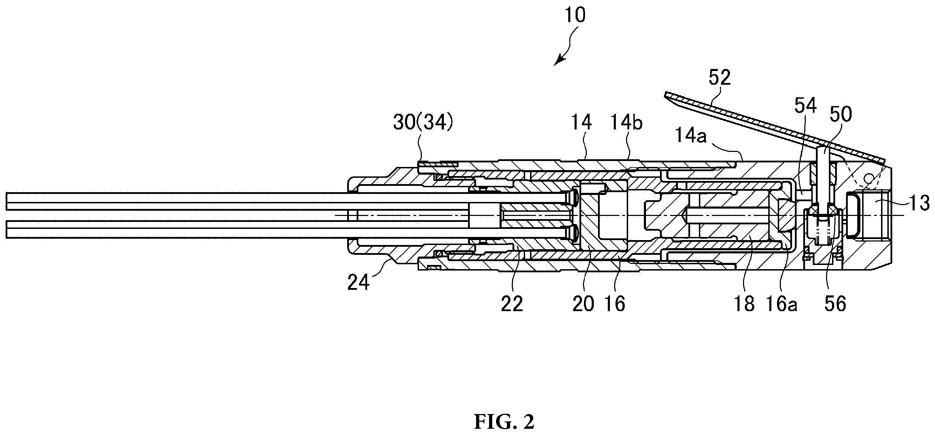

As shown in Fig. 1, a compressed air-driven chisel 10 according to an embodiment of the present invention includes a plurality (6 in the figure) of needles (needle chisels) 12 and drives the needles 12 forward and backward as a whole by compressed air introduced through a compressed air supply pipe (not shown) connected to an air inlet 13 (Fig. 2) at the rear end of the compressed air-driven chisel 10, thereby striking a part to be worked with the tips of the needles 12, and thus performing chipping or other similar operation. As shown in Fig. 2, the compressed air-driven chisel 10 has a cylindrical housing 14, and a cylinder 16 coaxially mounted in the housing 14 and closed at a rear end thereof by a closing member 16a. The compressed air-driven chisel 10 further has a piston 18, an anvil 20, and a needle holder 22 retaining the needles 12, which are axially sequentially mounted in the cylinder 16 in the mentioned order from the rear toward the forward end so as to be each axially movable. Further, the compressed air-driven chisel 10 has a forward end cylindrical member 24 secured to the forward end of the cylinder 16 to prevent the needle holder 22 from forwardly coming out of the cylinder 16 and to allow the needles retained by the needle holder 22 to pass therethrough so as to extend forward. The housing 14 comprises a housing rear part 14a and a housing forward part 14b. The housing rear and forward parts 14a and 14b are threadedly joined to each other, thereby holding the cylinder 16 therebetween from the forward and rear sides and thus securing the cylinder 16.

Although in the illustrated embodiment the forward end cylindrical member 24 is threadedly joined to the forward end of the cylinder 16, the forward end cylindrical member 24 may be threadedly joined to the forward end of the housing 14. The present invention prevents the forward end cylindrical member 24 from disengaging from the forward end of the compressed air-driven chisel 10 as a result of being rotated in the threaded engagement releasing direction by violent vibration due to the operation of the compressed air-driven chisel 10 regardless of whether the forward end cylindrical member 24 is threadedly joined to the cylinder 16 or to the housing 14. Accordingly, in this specification, a structure comprising the housing 14 and the cylinder 16 relative to the forward end cylindrical member 24 will be referred to as a "cylindrical chisel body 26", and rotation prevention of the forward end cylindrical member 24 relative to the cylindrical chisel body 26 in the threaded engagement releasing direction will be stated. It should be noted that the cylindrical chisel body 26 and the forward end cylindrical member 24 respectively correspond to the first element and the second element, which are mentioned in the sections entitled "Claims" and "Solution to Problem" in the specification of this application.

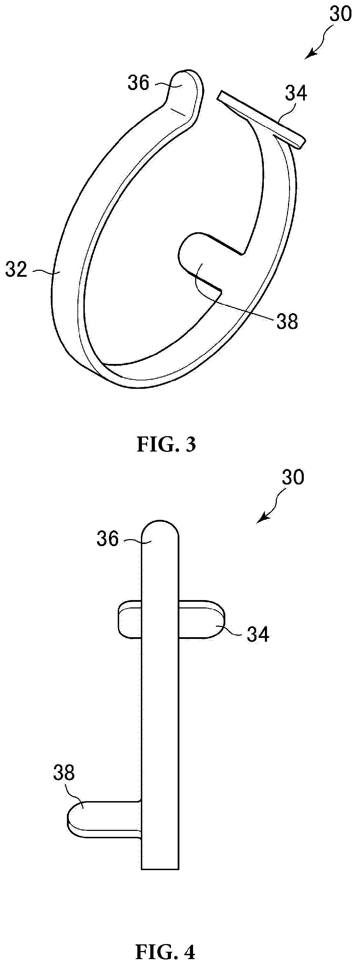

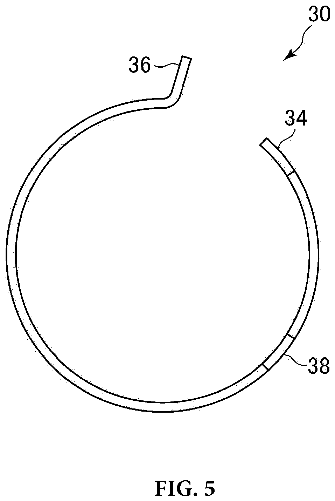

As shown in Figs. 1 and 2, a rotation preventing ring-shaped member 30 according to the present invention is provided around the outer peripheral surface of the threaded joint between the cylindrical chisel body 26 and the forward end cylindrical member 24. The rotation preventing ring-shaped member 30 comprises, as shown in Figs. 3 to 5, an elastic strip member (elongated plate-shaped member), and has an arcuately curved ring-shaped body 32, a first locking portion 34 extending from one end of the ring-shaped body 32 in both sideward directions, a release portion 36 extending radially outward from the other end of the ring-shaped body 32, and a second locking portion 38 extending sideward from one side of the ring-shaped body 32 between the first locking portion 34 and the release portion 36.

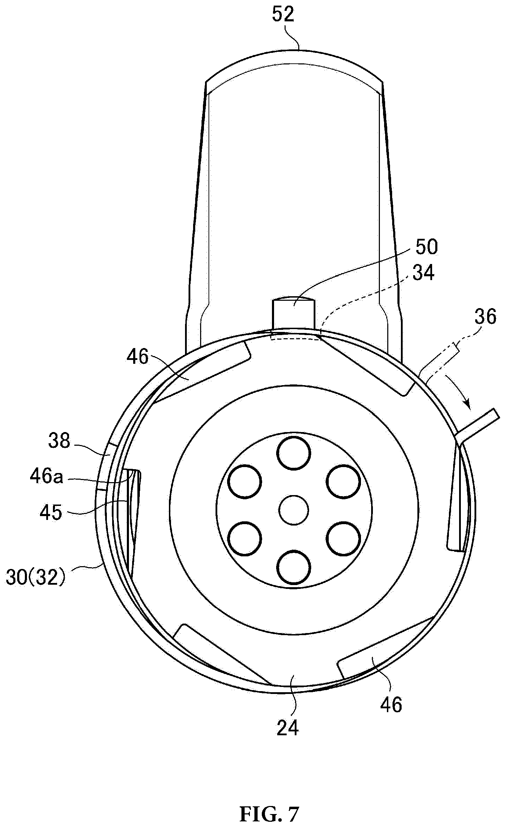

As shown in Fig. 1, the cylindrical chisel body 26 (housing 14) has an annular recess 40, first locking recesses 42 and 44, and a transit recess 45 (Fig. 7), which are provided on an outer peripheral surface of the cylindrical chisel body 26 near the forward end edge thereof. The annular recess 40 extends circumferentially so as to be fitted with the ring-shaped body 32. The first locking recesses 42 and 44 extend short from the annular recess 40 in both sideward directions (longitudinal direction of the cylindrical chisel body 26) so that the first locking portion 34 is fitted into the first locking recesses 42 and 44 when the ring-shaped body 32 is fitted into the annular recess 40. The transit recess 45 allows the second locking portion 38 to extend forward (of the cylindrical chisel body 26) to reach a point on the outer surface of the forward end cylindrical member 24.

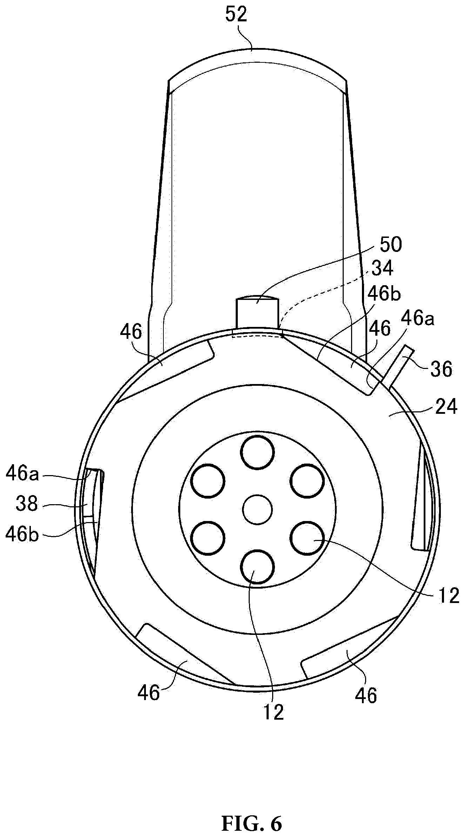

The forward end cylindrical member 24 has a plurality (6 in the illustrated example) of second locking recesses 46 provided on an outer peripheral surface thereof adjacent to the forward end of the cylindrical chisel body 26. The second locking recesses 46 are circumferentially spaced from each other so that the second locking portion 38 extending sideward from the annular recess 40 is engageable in one of the second locking recesses 46. As shown in Fig. 6, in this embodiment, each second locking recess 46 has a rotation preventing surface 46a extending substantially radially and an inclined surface 46b inclined toward the outer peripheral surface of the forward end cylindrical member 24 from the rotation preventing surface 46a. That is, the forward end cylindrical member 24 is threadedly joined to the cylindrical chisel body 26 by being rotated clockwise as seen in the figure. When the forward end cylindrical member 24 is urged to rotate in a threaded engagement releasing direction (i.e. counterclockwise direction), the rotation preventing surface 46a of the second locking recess 46 in which the second locking portion 38 is engaged engages the second locking portion 38 to prevent the rotation of the forward end cylindrical member 24. On the other hand, when the forward end cylindrical member 24 is urged to rotate further in a threadedly engaging direction (clockwise direction), the second locking portion 38 engaged in the second locking recess 46 is displaced radially outward by the inclined surface 46b to reach the outer surface of the forward end cylindrical member 24, thereby allowing the rotation of the forward end cylindrical member 24 in the threadedly engaging direction. It should be noted that reference numerals 50 and 52 shown in Fig. 6 denote an actuating pin and a lever, respectively. The actuating pin 50 is provided at the rear end of the cylindrical chisel body 26 (housing 14) to open and close an on-off valve 56 provided in a compressed air supply passage 54 extending from the air inlet 13. The lever 52 is pivotally attached to the cylindrical chisel body 26 to operate the actuating pin 50.

Fig. 7 shows the way in which the release portion 36 of the rotation preventing ring-shaped member 30 is displaced from the position shown in Fig. 6 in the clockwise direction (i.e. in a circumferential direction extending toward the first locking portion 34 from the release portion 36 along the ring-shaped body 32) in order to allow the forward end cylindrical member 24 to rotate in the threaded engagement releasing direction (counterclockwise direction). In this state, the ring-shaped body 32 of the rotation preventing ring-shaped member 30 is curved so as to expand outward, resulting in the second locking portion 38 being raised radially outward from the second locking recess 46 of the forward end cylindrical member 24. Accordingly, even if the forward end cylindrical member 24 is rotated in the threaded engagement releasing direction, the rotation preventing surface 46a of the second locking recess 46 cannot be locked by the second locking portion 38. Thus, the rotation of the forward end cylindrical member 24 is allowed.

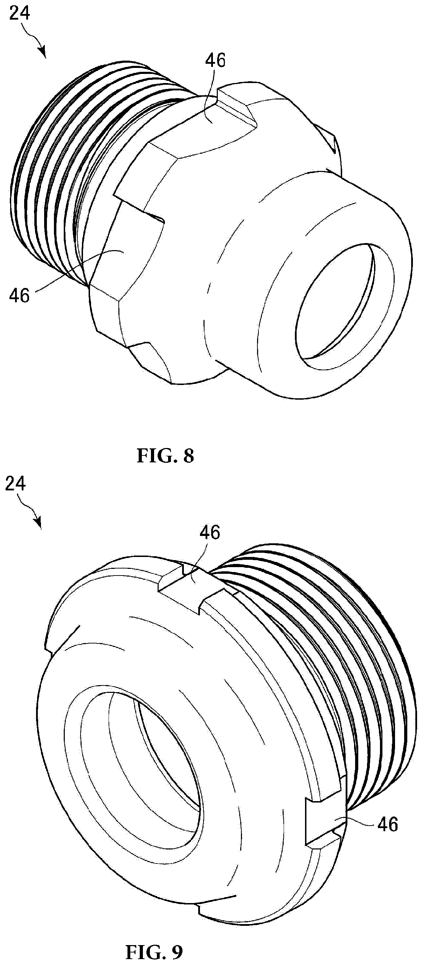

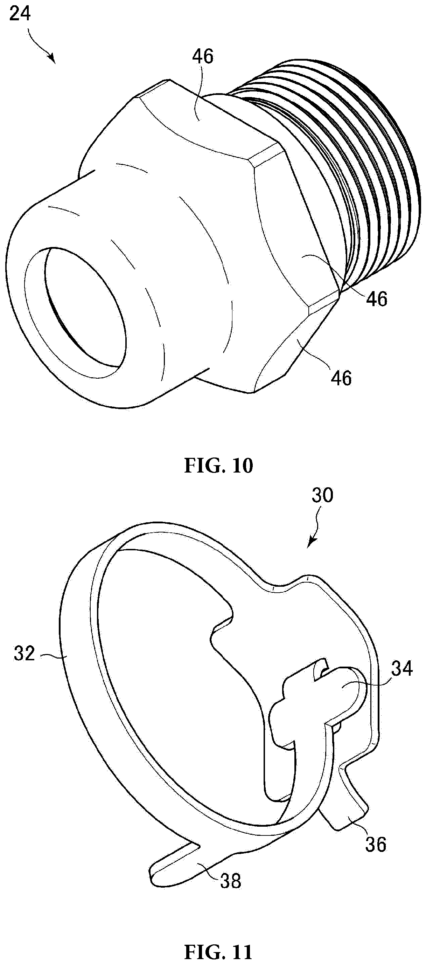

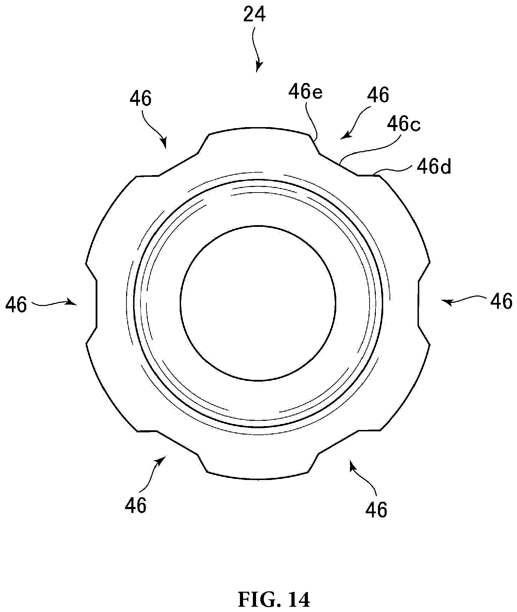

Fig. 8 is a perspective view of the above-described forward end cylindrical member 24. Fig. 9 shows a modification of the forward end cylindrical member 24 in which the second locking recesses 46 are provided to have a substantially rectangular cross-section. Fig. 10 shows a modification of the forward end cylindrical member 24 in which the second locking recesses 46 are formed as 6 chamfered portions spaced from each other in the circumferential direction. Fig. 14 shows a modification similar to the forward end cylindrical member 24 shown in Fig. 9. In this modification, each second locking recess 46 has a bottom surface 46c and side surfaces 46d and 46e extending from opposite circumferential sides, respectively, of the bottom surface 46c to the outer peripheral surface of the forward end cylindrical member 24. The side surfaces 46d and 46e are inclined in respective directions away from each other in the circumferential direction. Fig. 14 is a drawing similar to Figs. 6 and 7, showing the forward end cylindrical member 24 as seen from the front side thereof. In Fig. 14, the clockwise direction is the threadedly engaging direction, and the counterclockwise direction is the threaded engagement releasing direction. Accordingly, the side surface 46d extending from the clockwise side end of the bottom surface 46c of each second locking recess 46 has a function corresponding to that of the "rotation preventing surface 46a" of the forward end cylindrical member 24 in Fig. 7, and the side surface 46e has a function corresponding to that of the "inclined surface 46b" The side surface 46d is endowed with the above-described function of preventing rotation in the threaded engagement releasing direction, and in addition, the side surface 46d is inclined as stated above, thereby preventing interference with the radially outward displacement of the second locking portion 38 when the release portion 36 of the rotation preventing ring-shaped member 30 is displaced in a circumferential direction extending toward the first locking portion 34 circumferentially across the second locking portion 38, thereby causing the rotation preventing ring-shaped member 30 to curve so as to be raised from the outer peripheral surface of the cylindrical chisel body 26, as shown in Fig. 7, and thus allowing the second locking portion 38 to be displaced radially outward from the second locking recess 46. That is, as will be clear from comparison of Fig. 14 with Figs. 6 and 7, the second locking portion 38, which is displaceable in both the radially outward direction and the threadedly engaging direction, can be displaced radially outward without any interference even if engaging the side surface 46d as a rotation preventing surface.

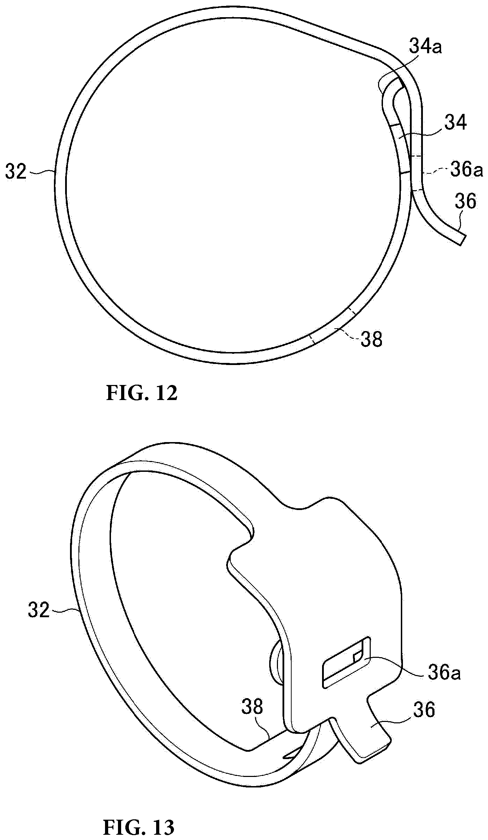

Figs. 11 to 13 show a modification of the rotation preventing ring-shaped member 30. That is, the rotation preventing ring-shaped member 30 of this modification has a ring-shaped body 32, a first locking portion 34 provided at one end of the ring-shaped body 32, a release portion 36 provided at the other end of the ring-shaped body 32, and a second locking portion 38 provided between the opposite ends, in the same way as the above. The rotation preventing ring-shaped member 30 further has a locking projection 34a extending further circumferentially from the first locking portion 34 and bent radially outward. The ring-shaped body 32 has at the other end thereof a wide-width portion overlapping with the radial outside of the locking projection 34a. The overlapping portion is provided with a locking opening 36a radially extending therethrough. Fig. 12 shows the rotation preventing ring-shaped member 30 when fitted in the annular recess 40 provided on the forward end outer peripheral surface of the cylindrical chisel body 26. In order to allow rotation of the forward end cylindrical member 24 in the threaded engagement releasing direction, the release portion 36 is displaced from the position shown in Fig. 12 in the counterclockwise direction as seen in Fig. 12 (i.e. in a circumferential direction extending toward the first locking portion 34 circumferentially across the second locking portion 38 along the ring-shaped body 32), thereby causing the rotation preventing ring-shaped member 30 to expand radially outward, as has been explained by using Fig. 7. At this time, the locking opening 36a is fitted with the locking projection 34a. That is, in this state, the worker can rotate the forward end cylindrical member 24 in the threaded engagement releasing direction without continuously applying a force for pushing the release portion 36.

Although some embodiments according to the present invention have been described above, the present invention is not limited to the described embodiments but can be modified in a variety of ways. For example, the annular recess 40 formed at the forward end of the cylindrical chisel body 26 to be fitted with the rotation preventing ring-shaped member 30 is provided at a position slightly away from the forward end of the outer peripheral surface of the cylindrical chisel body 26. The annular recess 40, however, may be provided to extend beyond the forward end of the outer peripheral surface of the cylindrical chisel body 26 to the outer surface of the forward end cylindrical member. In this case, the first locking portion is configured to extend only rearward of the cylindrical chisel body 26. The first locking portion is for preventing the ring-shaped body from rotating circumferentially relative to the cylindrical chisel body 26; therefore, a securing pin or a securing material, e.g. an adhesive, may be used to constitute the first locking portion. This alternative configuration may be used in place of or in combination with the above-described configuration in which the first locking portion extends sideward. It is also possible to hinge one end of the ring-shaped body 32 to the cylindrical chisel body 26. In this case, the ring-shaped body 32 of the rotation preventing ring-shaped member 30 can easily expand outward when the release portion 36 of the rotation preventing ring-shaped member 30 is displaced clockwise from the position shown in Fig. 6.

### Reference Signs List:

Compressed air-driven chisel 10; needles (needle chisels) 12; air inlet 13; housing 14; housing rear part 14a; housing forward part 14b; cylinder 16; closing member 16a; piston 18; anvil 20; needle holder 22; forward end cylindrical member 24 ("second element" in appended claims); cylindrical chisel body 26 ("first element" in appended claims); rotation preventing ring-shaped member 30; ring-shaped body 32; first locking portion 34; locking projection 34a; release portion 36; locking opening 36a; second locking portion 38; annular recess 40; first locking recesses 42 and 44; transit recess 45; second locking recesses 46 ("recess" in appended claims); rotation preventing surface 46a; inclined surface 46b; bottom surface 46c; side surfaces 46d, 46e; actuating pin 50; lever 52; compressed air supply passage 54; on-off valve 56.

## Claims

1. A rotation preventing ring-shaped member (30) configured to be circumferentially attached around a joint where a second element is joined to a first element by threaded engagement to prevent the second element from rotating relative to the first element in a threaded engagement releasing direction, the rotation preventing ring-shaped member (30) comprising:
a ring-shaped body (32) configured to be circumferentially disposed on at least an outer peripheral surface of an end edge portion of the first element at the joint, the ring-shaped body (32) having:
a first locking portion (34) configured to be to be locked to the first element;
a second locking portion (38) extending sideward from the ring-shaped body (32) and configured to engage the second element; and
a release portion (36);
**characterized in that** the second locking portion (38) is provided at a position along the ring-shaped body (32) which is spaced from the first locking portion (34) and which is between the first locking portion (34) and the release portion (36);
wherein the ring-shaped body is configured such that when the release portion (36) is displaced in a circumferential direction extending toward the first locking portion (34) along the ring-shaped body (32), the ring-shaped body (32) is curved to expand outward between the release portion (36) and the first locking portion (34).

2. The rotation preventing ring-shaped member (30) of claim 1, wherein the ring-shaped body (32) is formed by curving an elastic strip member.

3. The rotation preventing ring-shaped member of claim 1 or 2, wherein the first locking portion (34) extends sideward from the ring-shaped body.

4. The rotation preventing ring-shaped member (30) of any one of claims 1 to 3, wherein the first locking portion (34) extends sideward from both sides of the ring-shaped body (32) and wherein the second locking portion (36) extends sideward from the ring-shaped body beyond the extension of the first locking portion (34) on this side.

5. The rotation preventing ring-shaped member (30) of any one of claims 1 to 4, wherein the release portion (36) extends radially outward from the ring-shaped body (32) and is configured to receive a force causing the release portion (36) to be displaced in the circumferential direction towards the first locking portion (34) along the ring-shaped body (32).

6. The rotation preventing ring-shaped member (30) of any one of claims 1 to 5, wherein the first locking portion (34) and the release portion (36) are provided at opposite ends, respectively, of the ring-shaped body (32).

7. The rotation preventing ring-shaped member (30) of any one of claims 1 to 6, wherein the ring-shaped body has opposite end portions which are overlapped , the opposite end portions of the ring-shaped body (32) having engagement features (34a, 36a) such that when the release portion (36) is displaced in the circumferential direction extending toward the first locking portion (34) along the ring-shaped body (32) to thereby cause the ring-shaped body (32) to be curved radially outward, the engagement features (34a, 36a) at the opposite end portions of the ring-shaped body engage each other to hold the ring-shaped body in the curved state.

8. The rotation preventing ring-shaped member of claim 7, wherein the engagement features (34a, 36a) at the opposite end portions comprise a locking projection (34a), which is bent radially outward, and a locking opening (36a) configured to receive the locking projection (34a).

9. The rotation preventing ring-shaped member of any one of claims 1 to 8, further comprising: a securing material configured to secure the first locking portion (34) to the first element.

10. A compressed air-driven chisel (10) comprising:
a cylindrical chisel body (26);
a needle holder (22) disposed in the chisel body (26) and driven forward and backward in an axial direction by compressed air introduced into the chisel body (26), the needle holder (22) retaining a plurality of needles (12) such that the needles (12) extend forward from a forward end opening of the chisel body (26);
a forward end cylindrical member (24) of cylindrical shape joined to the chisel body (26) by being threadedly engaged with the forward end opening of the chisel body (26) to retain the needle holder (22) in the chisel body (26) and to allow the needles (12) to extend forward;
**characterised in that** the compressed air-driven chisel further comprises a rotation preventing ring-shaped member (30) of any one of claims 1 to 9, the rotation preventing ring-shaped member (30) being circumferentially disposed around an outer peripheral surface of a forward end edge portion of the chisel body (26) and locked to the chisel body (26) by the first locking portion (34), the second locking portion (38) being engaged with an outer surface of the forward end cylindrical member (24) to prevent the forward end cylindrical member (24) from rotating relative to the chisel body (26) in a threaded engagement releasing direction.

11. The compressed air-driven chisel (10) of claim 10, wherein the forward end cylindrical member (24) has a recess (46) provided in a portion of an outer peripheral surface thereof adjacent to the forward end edge portion of the chisel body (26), the second locking portion (38) being engaged in the recess (46) to prevent the forward end cylindrical member (24) from rotating in the threaded engagement releasing direction.

12. The compressed air-driven chisel (10) of claim 11, wherein the recess (46) has a rotation preventing surface (46a) engaged by the second locking portion (38) engaged in the recess (46) when the forward end cylindrical member is urged to rotate in the threaded engagement releasing direction without displacing the release portion (36) in the circumferential direction extending toward the first locking portion along the ring-shaped body (32), thereby preventing the forward end cylindrical member (24) from rotating in the threaded engagement releasing direction, the recess (46) further having an inclined surface (46b) allowing the second locking portion (38) engaged in the recess (46) to be displaced radially outward from the recess (46) when the forward end cylindrical member (24) is urged to rotate in a threadedly engaging direction.

13. The compressed air-driven chisel (10) of claim 12, wherein the recess (46) has a bottom surface (46c) and a side surface (46d) extending from an end of the bottom surface (46c) at a threadedly engaging direction side thereof to the outer peripheral surface of the forward end cylindrical member (24) so as to be inclined in the threadedly engaging direction, thereby constituting the rotation preventing surface, the recess further having a side surface (46e) extending from an end of the bottom surface (46c) at a threaded engagement releasing direction side thereof to the outer periphery of the forward end cylindrical member (24) so as to be inclined in the threaded engagement releasing direction, thereby constituting the inclined surface.

## Patentansprüche

1. Drehung verhinderndes ringförmiges Element (30), das konfiguriert ist, um umlaufend um eine Verbindung befestigt zu werden, wo ein zweites Element mit einer ersten Element durch Gewindeeingriff verbunden ist, um zu verhindern, dass das zweite Element sich relativ zum ersten Element in einer Richtung des Freigebens des Gewindeeingriffs dreht, wobei das Drehung verhindernde ringförmige Element (30) Folgendes aufweist:
einen ringförmigen Körper (32), der konfiguriert ist, um umlaufend an mindestens einer Außenumfangsfläche eines Kantenteils des ersten Elementes an der Verbindung angeordnet zu werden, wobei der ringförmige Körper (32) Folgendes hat:
einen ersten Verriegelungsteil (34), der konfiguriert ist, um mit dem ersten Element verriegelt zu sein;
einen zweiten Verriegelungsteil (38), der sich seitwärts von dem ringförmigen Körper (32) erstreckt und konfiguriert ist, um mit dem zweiten Element in Eingriff zu kommen; und
einen Freigabeteil (36);
**dadurch gekennzeichnet, dass** der zweite Verriegelungsteil (38) an einer Position entlang des ringförmigen Körpers (32) vorgesehen ist, der von dem ersten Verriegelungsteil (34) beabstandet ist und der zwischen dem ersten Verriegelungsteil (34) und dem Freigabeteil (36) ist;
wobei der ringförmige Körper so konfiguriert ist, dass, wenn der Freigabeteil (36) in einer Umfangsrichtung angeordnet ist, und zwar sich erstreckend zu dem ersten Verriegelungsteil (34) entlang des ringförmigen Körpers (32), der ringförmige Körper (32) so gekrümmt ist, dass er sich zwischen dem Freigabeteil (36) und dem ersten Verriegelungsteil (34) nach außen ausdehnt.

2. Drehung verhinderndes ringförmiges Element (30) nach Anspruch 1, wobei der ringförmige Körper (32) durch Biegen eines elastischen Streifenelementes geformt ist.

3. Drehung verhinderndes ringförmiges Element (30) nach Anspruch 1 oder 2, wobei der erste Verriegelungsteil (34) sich seitwärts von dem ringförmigen Körper erstreckt.

4. Drehung verhinderndes ringförmiges Element (30) nach einem der Ansprüche 1 bis 3, wobei der erste Verriegelungsteil (34) sich seitwärts von beiden Seiten des ringförmigen Körpers (32) erstreckt, und wobei der zweite Verriegelungsteil (36) sich seitwärts von dem ringförmigen Körper über die Verlängerung des ersten Verriegelungsteils (34) auf dieser Seite erstreckt.

5. Drehung verhinderndes ringförmiges Element (30) nach einem der Ansprüche 1 bis 4, wobei der Freigabeteil (36) sich radial nach außen von dem ringförmigen Körper (32) erstreckt und konfiguriert ist, um eine Kraft aufzunehmen, die bewirkt, dass der Freigabeteil (36) in der Umfangsrichtung zu dem ersten Verriegelungsteil (34) entlang des ringförmigen Körpers (32) verschoben wird.

6. Drehung verhinderndes ringförmiges Element (30) nach einem der Ansprüche 1 bis 5, wobei der erste Verriegelungsteil (34) und der Freigabeteil (36) jeweils an entgegengesetzten Enden des ringförmigen Körpers (32) vorgesehen sind.

7. Drehung verhinderndes ringförmiges Element (30) nach einem der Ansprüche 1 bis 6, wobei der ringförmige Körper entgegengesetzte Endteile hat, die sich überlappen, wobei die entgegengesetzten Endteile des ringförmigen Körpers (32) Eingriffsmerkmale (34a, 36a) haben, so dass, wenn der Freigabeteil (36) in der Umfangsrichtung verschoben wird, und zwar sich erstreckend zu dem ersten Verriegelungsteil (34) entlang des ringförmigen Körpers (32), um dadurch zu bewirken, dass der ringförmige Körper radial nach außen gekrümmt wird, die Eingriffsmerkmale (34a, 36a) an den entgegengesetzten Endteilen des ringförmigen Körpers (32) miteinander in Eingriff kommen, um den ringförmigen Körper in dem gekrümmten Zustand zu halten.

8. Drehung verhinderndes ringförmiges Element (30) nach Anspruch 7, wobei die Eingriffsmerkmale (34a, 36a) an den entgegengesetzten Endteilen einen Verriegelungsvorsprung (34a) aufweisen, der radial nach außen gebogen ist, und eine Verriegelungsöffnung (36a), die konfiguriert ist, um den Verriegelungsvorsprung (34a) aufzunehmen.

9. Drehung verhinderndes ringförmiges Element (30) nach einem der Ansprüche 1 bis 8, welches weiter Folgendes aufweist: ein Sicherungsmaterial, das konfiguriert ist, um den ersten Verriegelungsteil (34) an dem ersten Element zu sichern.

10. Druckluftgetriebener Meißel (10), der Folgendes aufweist:
einen zylindrischen Meißelkörper (26);
einen Nadelhalter (22), der in dem Meißelkörper (26) angeordnet ist und in axialer Richtung durch Druckluft, die in den Meißelkörper (26) eingeleitet wird, nach vorne und hinten getrieben wird, wobei der Nadelhalter (22) eine Vielzahl von Nadeln (12) hält, so dass die Nadeln (12) sich aus einer Öffnung des vorderen Endes des Meißelkörpers (26) nach vorne erstrecken;
ein zylindrisches Element (24) des vorderen Endes mit zylindrischer Form, das mit dem Meißelkörper (26) verbunden ist, indem es in Gewindeeingriff mit der Öffnung des vorderen Endes des Meißelkörpers (26) ist, um den Nadelhalter (22) in dem Meißelkörper (26) zu halten und zu gestatten,
dass die Nadeln (22) sich nach vorne erstrecken;
**dadurch gekennzeichnet, dass** der druckluftgetriebene Meißel weiter ein Drehung verhinderndes ringförmiges Element (30) nach einem der Ansprüche 1 bis 9 aufweist, wobei das Drehung verhindernde ringförmige Element (30) in Umfangsrichtung um eine Außenumfangsfläche eines Kantenteils des vorderen Endes des Meißelkörpers (26) angeordnet ist und an dem Meißelkörper (26) durch den ersten Verriegelungsteil (34) verriegelt ist, wobei der zweite Verriegelungsteil (38) mit einer Außenfläche des zylindrischen Elementes (24) des vorderen Endes in Eingriff ist, um zu verhindern, dass das zylindrische Element (24) des vorderen Endes sich relativ zum Meißelkörper (26) in einer Freigaberichtung des Gewindeeingriffs dreht.

11. Druckluftgetriebener Meißel (10) nach Anspruch 10, wobei das zylindrische Element (24) des vorderen Endes eine Vertiefung (46) hat, die in einem Teil einer Außenumfangsfläche davon vorgesehen ist, und zwar benachbart zu dem Kantenteil des vorderen Endes des Meißelkörpers (26), wobei der zweite Verriegelungsteil (38) in der Vertiefung (26) in Eingriff ist, um zu verhindern, dass das zylindrische Element (24) des vorderen Endes sich in der Freigaberichtung des Gewindeeingriffs dreht.

12. Druckluftgetriebener Meißel (10) nach Anspruch 11, wobei die Vertiefung (46) eine Drehungsverhinderungsfläche (46a) hat, die in Eingriff mit dem zweiten Verriegelungsteil (38) ist, der in der Ausnehmung (46) in Eingriff ist, wenn das zylindrische Element des vorderen Endes gezwungen wird, sich in der Freigaberichtung des Gewindeeingriffs zu drehen, ohne den Freigabeteil (36) in der Umfangsrichtung zu verschieben, die sich zu dem ersten Verriegelungsteil entlang des ringförmigen Körpers (32) erstreckt, wodurch verhindert wird, dass das zylindrische Element (24) des vorderen Endes sich in der Freigaberichtung des Gewindeeingriffs dreht, wobei die Vertiefung (46) weiter eine geneigte Oberfläche (46b) hat, welche gestattet, dass der zweite Verriegelungsteil (38), der mit der Vertiefung (46) in Eingriff ist, von der Vertiefung (46) radial nach außen verschoben wird, wenn das zylindrische Element (24) des vorderen Endes dazu gezwungen wird, sich in einer Gewindeeingriffsrichtung zu drehen.

13. Druckluftgetriebener Meißel (10) nach Anspruch 12, wobei die Vertiefung (46) eine untere Fläche (46c) und eine Seitenfläche (46d) hat, die sich von einem Ende der unteren Fläche (46c) an einer Gewindeeingriffsrichtungsseite davon erstreckt, und zwar zu der Außenumfangsfläche des zylindrischen Elementes (24) des vorderen Endes, so dass sie in der Gewindeeingriffsrichtung geneigt ist, wodurch die Drehungsverhinderungsfläche gebildet wird, wobei die Vertiefung weiter eine Seitenfläche (46e) hat, die sich von einem Ende der unteren Fläche (46c) an einer Gewindeeingriffsfreigaberichtungsseite davon erstreckt, und zwar zum Außenumfang des zylindrischen Elementes (24) des vorderen Endes, so dass sie in der Freigaberichtung des Gewindeeingriffs geneigt, ist, wodurch die geneigte Oberfläche gebildet wird.

## Revendications

1. Élément en forme d'anneau empêchant une rotation (30) configuré pour être fixé circonférentiellement autour d'une articulation où un deuxième élément est relié à un premier élément par engagement par filetage pour empêcher le deuxième élément de tourner par rapport au premier élément dans une direction de libération d'engagement par filetage, l'élément en forme d'anneau empêchant la rotation (30) comprenant :
un corps en forme d'anneau (32) disposé circonférentiellement sur au moins une surface périphérique externe d'une partie de bord d'extrémité du premier élément au niveau de l'articulation, le corps en forme d'anneau (32) ayant :
une première partie de verrouillage (34) configurée pour être verrouillée sur le premier élément ;
une deuxième partie de verrouillage (38) s'étendant latéralement depuis le corps en forme d'anneau (32) et configurée pour engager le deuxième élément ; et
une partie de libération (36) ;
**caractérisé en ce que** la deuxième partie de verrouillage (38) est prévue au niveau d'une position le long du corps en forme d'anneau (32) qui est espacée de la première partie de verrouillage (34) et qui est entre la première partie de verrouillage (34) et la partie de libération (36) ;
dans lequel le corps en forme d'anneau est configuré de sorte que, lorsque la partie de libération (36) est déplacée dans une direction circonférentielle s'étendant vers la première partie de verrouillage (34) le long du corps en forme d'anneau (32), le corps en forme d'anneau (32) est incurvé pour s'étendre vers l'extérieur entre la partie de libération (36) et la première partie de verrouillage (34).

2. Élément en forme d'anneau empêchant une rotation (30) selon la revendication 1, dans lequel le corps en forme d'anneau (32) est formé en incurvant un élément en bande élastique.

3. Élément en forme d'anneau empêchant une rotation selon la revendication 1 ou 2, dans lequel la première partie de verrouillage (34) s'étend latéralement depuis le corps en forme d'anneau.

4. Élément en forme d'anneau empêchant une rotation (30) selon l'une quelconque des revendications 1 à 3, dans lequel la première partie de verrouillage (34) s'étend latéralement depuis les deux côtés du corps en forme d'anneau (32) et dans lequel la deuxième partie de verrouillage (36) s'étend latéralement depuis le corps en forme d'anneau au-delà de l'étendue de la première partie de verrouillage (34) sur ce côté.

5. Élément en forme d'anneau empêchant une rotation (30) selon l'une quelconque des revendications 1 à 4, dans lequel la partie de libération (36) s'étend radialement vers l'extérieur depuis le corps en forme d'anneau (32) pour recevoir une force amenant la partie de libération (36) à se déplacer dans la direction circonférentielle vers la première partie de verrouillage (34) le long du corps en forme d'anneau (32).

6. Élément en forme d'anneau empêchant une rotation (30) selon l'une quelconque des revendications 1 à 5, dans lequel la première partie de verrouillage (34) et la partie de libération (36) sont prévues au niveau d'extrémités opposées du corps en forme d'anneau (32), respectivement.

7. Élément en forme d'anneau empêchant une rotation (30) selon l'une quelconque des revendications 1 à 6, dans lequel le corps en forme d'anneau a des parties d'extrémité opposées qui se chevauchent, les parties d'extrémité opposées du corps en forme d'anneau (32) ayant des éléments d'engagement (34a, 36a) tels que, lorsque la partie de libération (36) est déplacée dans la direction circonférentielle s'étendant vers la première partie de verrouillage (34) le long du corps en forme d'anneau (32) pour ainsi amener le corps en forme d'anneau (32) à être incurvé radialement vers l'extérieur, les éléments d'engagement (34a, 36a) au niveau des parties d'extrémité opposées du corps en forme d'anneau s'engagent l'une avec l'autre pour maintenir le corps en forme d'anneau dans l'état incurvé.

8. Élément en forme d'anneau empêchant une rotation selon la revendication 7, dans lequel les éléments d'engagement (34a, 36a) au niveau des parties d'extrémité opposées comprennent une saillie de verrouillage (34a), qui est pliée radialement vers l'extérieur, et une ouverture de verrouillage (36a) configurée pour recevoir la saillie de verrouillage (34a).

9. Élément en forme d'anneau empêchant la rotation selon l'une quelconque des revendications 1 à 8, comprenant en outre : un matériau de fixation configuré pour fixer la première partie de verrouillage (34) au premier élément.

10. Ciseau à air comprimé (10) comprenant :
un corps de ciseau cylindrique (26) ;
un porte-aiguille (22) disposé dans le corps de ciseau (26) et entraîné vers l'avant et vers l'arrière dans une direction axiale par de l'air comprimé introduit dans le corps de ciseau (26), le porte-aiguille (22) retenant une pluralité d'aiguilles (12) de sorte que les aiguilles (12) s'étendent vers l'avant depuis une ouverture d'extrémité avant du corps de ciseau (26) ;
un élément cylindrique d'extrémité avant (24) de forme cylindrique relié au corps de ciseau (26) en étant engagé par filetage avec l'ouverture d'extrémité avant du corps de ciseau (26) pour retenir le porte-aiguille (22) dans le corps de ciseau (26) et pour permettre aux aiguilles (12) de s'étendre vers l'avant ;
**caractérisé en ce que** le ciseau à air comprimé comprend en outre un élément en forme d'anneau empêchant une rotation (30) selon l'une quelconque des revendications 1 à 9, l'élément en forme d'anneau empêchant une rotation (30) étant disposé circonférentiellement autour d'une surface périphérique externe d'une partie de bord d'extrémité avant du corps de ciseau (26) et verrouillé sur le corps de ciseau (26) par la première partie de verrouillage (34), la deuxième partie de verrouillage (38) étant engagée avec une surface extérieure de l'élément cylindrique d'extrémité avant (24) pour empêcher l'élément cylindrique d'extrémité avant (24) de tourner par rapport au corps de ciseau (26) dans une direction de libération de l'engagement par filetage.

11. Ciseau à air comprimé (10) selon la revendication 10, dans lequel l'élément cylindrique d'extrémité avant (24) a un évidement (46) prévu dans une partie de sa surface périphérique externe adjacente à la partie de bord d'extrémité avant du corps de ciseau (26), la deuxième partie de verrouillage (38) étant engagée dans l'évidement (46) pour empêcher l'élément cylindrique d'extrémité avant (24) de tourner dans la direction de libération de l'engagement par filetage.

12. Ciseau à air comprimé (10) selon la revendication 11, dans lequel l'évidement (46) a une surface empêchant la rotation (46a) engagée par la deuxième partie de verrouillage (38) engagée dans l'évidement (46) lorsque l'élément cylindrique d'extrémité avant est sollicité pour tourner dans la direction de libération de l'engagement par filetage sans déplacer la partie de libération (36) dans la direction circonférentielle s'étendant vers la première partie de verrouillage le long du corps en forme d'anneau (32), empêchant ainsi l'élément cylindrique d'extrémité avant (24) de tourner dans la direction de libération de l'engagement par filetage, l'évidement (46) ayant en outre une surface inclinée (46b) permettant à la deuxième partie de verrouillage (38) engagée dans l'évidement (46) d'être déplacé radialement vers l'extérieur depuis l'évidement (46) lorsque l'élément cylindrique d'extrémité avant (24) est sollicité pour tourner dans une direction d'engagement par filetage.

13. Ciseau à air comprimé (10) selon la revendication 12, dans lequel l'évidement (46) a une surface inférieure (46c) et une surface latérale (46d) s'étendant depuis une extrémité de la surface inférieure (46c) au niveau de son côté de direction d'engagement par filetage jusqu'à la surface périphérique externe de l'élément cylindrique d'extrémité avant (24) de sorte à être incliné dans la direction d'engagement par filetage, constituant ainsi la surface empêchant la rotation, l'évidement ayant en outre une surface latérale (46e) s'étendant depuis une extrémité de la surface inférieure (46c) au niveau d'un côté de direction de libération d'engagement par filetage de celle-ci jusqu'à la périphérie externe de l'élément cylindrique d'extrémité avant (24) de sorte à être incliné dans la direction de libération de l'engagement par filetage, constituant ainsi la surface inclinée.
